# EUROPÄISCHE PATENTSCHRIFT

(11) **EP 1 995 119 B1**
(45) Veröffentlichungstag und Bekanntmachung des Hinweises auf die Patenterteilung: **30.05.2012**
(21) Anmeldenummer: 08008399.1
(22) Anmeldetag: 05.05.2008
(51) Int. Cl.: B60R 9/06, B60R 9/045, B60R 9/10

(54) **Lastenträger für ein Kraftfahrzeug**
Load carrier for a motor vehicle
Support de charge pour un véhicule automobile

(30) Priorität: 19.05.2007 DE 102007023495
(43) Veröffentlichungstag der Anmeldung: 26.11.2008
(73) Patentinhaber: WESTFALIA - Automotive GmbH, 33378 Rheda-Wiedenbrück (DE)
(72) Erfinder: Hermbusch, Gerhard, 33449 Langenberg (DE)
(74) Vertreter: Bregenzer, Michael

(56) Entgegenhaltungen:
- DE-T2- 69 500 037
- US-A1- 2007 102 465

## Beschreibung

Die Erfindung betrifft einen Lastenträger für ein Kraftfahrzeug, insbesondere einen Personenkraftwagen, gemäß dem Oberbegriff des Anspruchs 1.

Ein derartiger Lastenträger ist z.B. aus DE 695 00 037 T2 bekannt.

Schwenkteile eines Lastenträgers gemäß DE 10 2007 014 442 sind zwischen einer am Ladegestell nach innen geschwenkten Nichtgebrauchsstellung und einer vor das Ladegestell nach außen geschwenkten, den Ladebereich vergrößernden Gebrauchsstellung schwenkbar. In der Gebrauchsstellung schlagen die Schwenkteile an dem Ladegestell an, wenn sie eine horizontale Position einnehmen. Allerdings sind die Schwenkteile in der Schwenkposition nicht festgelegt, was z.B. beim Überfahren von Bodenunebenheiten zu einer Schwingbewegung der Schwenkteile führen kann.

Es ist daher die Aufgabe der vorliegenden Erfindung, eine verbesserte Schwenkfestlegung für das mindestens eine Schwenkteil bei einem Heck-Lastenträger der eingangs genannten Art bereitzustellen.

Zur Lösung der Aufgabe ist ein Lastenträger gemäß der technischen Lehre des Anspruchs 1 vorgesehen.

In dem Ladegestell-Haltebereich ist das mindestens eine Schwenkteil schwenkfest festgelegt, während es in dem Lagerbereich schwenkbar ist. Somit sind für die Schwenkfestlegung und die Schwenkbarkeit des Schwenkteils verschiedene Bereiche vorgesehen. Die Last ist z.B. mindestens ein Fahrrad, ein Transportbehälter oder dergleichen.

Vorteilhafterweise legt die Schwenkfixierungseinrichtung das mindestens eine Schwenkteil bei einem Einschieben in den Ladegestell-Haltebereich schwenkfest fest.

Die Erfindung sieht vor, dass mindestens ein Vorsprung der Schwenkfixierungseinrichtung zur Schwenkfestlegung des Schwenkteils in eine entlang der Schwenkachse verlaufende Nut eingreift, wobei die Nut zum Einschieben des mindestens einen Vorsprungs zum Ladegestell-Lagerbereich hin seitlich offen ist. Der mindestens eine Vorsprung kann z.B. ein Dorn, ein Zahn, eine parallel zur Schwenkachse verlaufende Rippe oder auch eine Art Längsführungsleiste sein.

Es versteht sich, dass mehrere Nuten und nur ein einziger Vorsprung oder mehrere Vorsprünge und nur eine einzige Nut vorgesehen sein können sowie mehrere Nuten und mehrere Vorsprünge.

Die Nut ist an einem von dem Ladegestell-Lagerbereich entfernten Ende mit einem Schiebeanschlag versehen. Dieser Schiebeanschlag wird beispielsweise durch ein geschlossenes Ende der Nut gebildet. Ferner kann auch eine konische Verengung vorgesehen sein, so dass im Bereich des Schiebeanschlags das Schwenkteil eine Axial-Endstellung einnimmt.

Der mindestens eine Vorsprung steht vorzugsweise nach radial außen vor den Ladegestell-Haltebereich vor. Die Nut ist korrespondierend zu einem Innenumfang des Lagerbereichs des Schwenkteils offen. Auch hier versteht sich, dass die umkehrte Maßnahme sein kann, dass an dem Ladegestell-Haltebereich nach radial außen offene Nuten vorgesehen sind, während der oder die Vorsprünge nach innen, das heißt zum Ladegestell-Haltebereich hin vorstehen.

Der oder die Vorsprünge bzw. der oder die Nuten bilden vorzugsweise Bestandteile von Zahnstrukturen mit mehreren Vorsprüngen bzw. mehreren Nuten. Es versteht sich, dass beispielsweise nur ein einziger Vorsprung vorgesehen sein kann, der wahlweise in verschiedenen Nuten einer Nut-Zahnstruktur eingreifen kann. Vorzugsweise sind jedoch mehrere Vorsprünge und mehrere Nuten in der Art einer Zahnstruktur vorgesehen, so dass gleichzeitig mehrere Vorsprünge und Nuten ineinander greifen und so eine gleichmäßige Lastverteilung der Schwenkfixierungseinrichtung ermöglichen. Ferner ist es möglich, dass das mindestens eine Schwenkteil in mindestens zwei, vorzugsweise in mehreren Schwenkpositionen bezüglich des Ladegestell-Lagerbereichs schwenkfest festlegbar ist. Bei zahlreichen Zahnungen der Zahnstruktur können auch weitere Schwenkpositionen des Schwenkteils möglich sein, so dass das Schwenkteil in einer exakten, je nach Bedarf einstellbaren Schwenkposition bezüglich des Ladegestells schwenkfest festlegbar ist.

Zweckmäßigerweise ist die jeweilige Zahnstruktur an einem gesamten Außenumfang des Ladegestell-Lagerbereichs vorgesehen. Dieselbe Maßnahme ist auch an dem Schwenkteil-Lagerbereich vorteilhaft, wo die Zahnstruktur einen gesamten Innenumfang des Schwenkteil-Lagerbereichs einnehmen kann. Eine Zahnstruktur an einem Teil-Innenumfang und/oder einem Teil-Außenumfang ist aber auch möglich.

Bei der Zahnstruktur, die an dem Schwenkteil-Lagerbereich vorgesehen ist, ist es vorteilhaft, wenn zur Bildung einer Gleitlagerung ein freier Innenumfang der Zahnstruktur etwa einem Außenumfang des Ladegestell-Lagerbereichs entspricht.

Zweckmäßigerweise haben die Zahnstrukturen äquidistante Zahn-Vorsprünge und Zahnnuten, so dass bezüglich der Schwenkpositionen, in denen das Schwenkteil bezüglich des Lagergestells schwenkfest festlegbar ist, ein Raster entsprechend der Distanz zwischen den Zahnvorsprüngen und den Zahn-Nuten vorliegt. Es versteht sich, dass auch nicht äquidistante Zahnstrukturen möglich sind, z.B. um die Anzahl der möglichen Schwenkpositionen des Schwenkteils bezüglich des Ladegestells einzuschränken.

Vorzugsweise weist die Schwenkteilanordnung mindestens zwei Schwenkteile auf, die an zwei einander gegenüberliegenden Ladegestell-Lagerbereichen jeweils um eine Schwenkachse schwenkbar sind und ferner entlang der Schwenkachse axial verschieblich sind. In der Nichtgebrauchsstellung sind die Schwenkteile vorzugsweise nebeneinander in einem Aufbewahrungsraum angeordnet, während sie in der Gebrauchsstellung vor das Ladegestell vorstehen.

Zweckmäßigerweise liegen die Schwenkteile in der Nichtgebrauchsstellung aneinander an. Somit kann beispielsweise eines der Schwenkteile zur Festlegung, insbesondere Schwenkfestlegung, des anderen Schwenkteiles in der Nichtgebrauchsstellung dienen.

Die Haltebereiche der beiden Ladegestell-Lagerbereiche verlaufen vorzugsweise einander derart gegenüberliegend, dass zum Verschieben eines der in Nichtgebrauchsstellung befindlichen Schwenkteile aus dem Ladegestell-Haltebereich in den jeweils nebenliegenden Ladegestell-Lagerbereich das gegenüberliegende andere Schwenkteil zumindest teilweise aus dem Aufbewahrungsraum ausgeschwenkt werden muss. Diese Anordnung ist besonders platzsparend.

In der Gebrauchsstellung verlaufen die beiden Schwenkteile vorzugsweise entlang einer Achslinie, beispielsweise zur Aufnahme eines Vorder- und eines Hinterrades eines Fahrrades.

Die Schwenkteilanordnung umfasst zweckmäßigerweise ein erstes und ein zweites Schwenkteil-Paar, die einander gegenüberliegend an dem Ladegestellt gelagert sind. Die Schwenkteile des ersten und des zweiten Schwenkteilpaars sind zweckmäßigerweise in der Nichtgebrauchsstellung in dem Aufbewahrungsraum abwechselnd nebeneinander angeordnet.

Zweckmäßigerweise sind am Ladegestell die Haltebereiche für ein jeweiliges Schwenkteilpaar voneinander entfernt angeordnet, während die ladegestellseitigen Lagerbereiche nebeneinander angeordnet sind. Somit haben die Schwenkteile in der Gebrauchsstellung, wenn sie drehfest bzw. schwenkfest an dem Ladegestell festgelegt sind, einen maximalen Abstand zueinander.

Das Schwenkteil kann beispielsweise eine Platte, ein Aufnahme oder dergleichen umfassen. Besonders bevorzugt umfasst das Schwenkteil eine Art Rinne beispielsweise zur Aufnahme eines Fahrrads.

Der Lastenträger umfasst vorzugsweise eine Steckanordnung mit mindestens einer Steckaufnahme für mindestens ein Steckbauteil. Das Steckbauteil ist in mindestens eine Steckaufnahme einsteckbar, wo es seine Gebrauchsstellung einnimmt. Als Steckbauteile sind vielfältige Funktions- und Halte-Bauteile möglich, beispielsweise eine Stütze, die in der Gebrauchsstellung nach oben vor das Ladegestell vorsteht. Die Stütze wird zweckmäßigerweise neben einem oder mehreren der vorgenannten Schwenkteile positioniert, um beispielsweise ein Fahrrad zu halten.

Das Steckbauteil kann aber auch eine Leuchte sein, die in der Gebrauchsstellung an dem Ladegestell oder einem Schwenkteil angeordnet ist. Das oder die Steckbauteile sind zweckmäßigerweise Bestandteile einer Steckbauteilgruppe, die in der Nichtgebrauchsstellung in einem Aufbewahrungsraum des Ladegestells anordenbar sind. Dort ist zweckmäßigerweise auch die Schwenkteilanordnung in der Nichtgebrauchsstellung positioniert. Beispielsweise ist das mindestens eine Steckbauteil in der Nichtgebrauchsstellung unterhalb des mindestens eines Schwenkteils angeordnet. Somit kann das Steckbauteil eine Stütze für das Schwenkteil bilden.

Vorzugsweise ist der Ladegestell-Lagerbereich an einer Tragstange, beispielsweise einem Tragrohr vorgesehen. Das Tragrohr kann einen Bestandteil eines Tragrohrrahmens bilden.

Zweckmäßigerweise ist das Ladegestell an dem Kraftfahrzeug verschieblich gelagert. Beispielsweise ist das Ladegestell schubladenartig aus einem Heckbereich des Kraftfahrzeugs in die Arbeitsstellung ausziehbar bzw. in eine Ruhestellung in einen Aufnahmeraum in der Karosserie des Kraftfahrzeugs oder unterhalb der Karosserie des Kraftfahrzeugs einschiebbar.

Es versteht sich, dass der Lastenträger auch als eine abnehmbare Anordnung ausgestaltet sein kann. So hat der Lastenträger beispielsweise eine Halterung zum lösbaren Anordnen an einer Anhängekupplung des Kraftfahrzeuges.

Vorzugsweise ist das Ladegestell an einer Tragstruktur zwischen einer Fahrstellung und einer Freigabestellung schwenkbar gelagert. In der Freigabestellung gibt das Ladegestell zweckmäßigerweise einen Schwenkbereich einer Heckklappe des Kraftfahrzeuges frei.

Nachfolgend wird ein Ausführungsbeispiel der Erfindung anhand der Zeichnung erläutert. Es zeigen:
- Figur 1: einen Lastenträger in perspektivischer Darstellung in Arbeitsstellung,
- Figur 2: eine Detailansicht des Lastenträgers gemäß Figur 1 etwa entsprechend einem Ausschnittsbereich A in Figur 1 zur Veranschaulichung einer Schwenkfixiereinrichtung für ein Schwenkteil,
- Figur 3: den Lastenträger gemäß Figur 1 in perspektivischer Darstellung mit einem in eine Freigabestellung geschwenkten Ladegestell,
- Figur 4: den Lastenträger gemäß Figur 1 mit nach innen geklappten Schwenkteilen sowie mit Steckbauteilen, die in Aufbewahrungslage sind,
- Figuren 5, 6 und 7: eine Darstellungsfolge zur Veranschaulichung eines Ausschwenkens von Schwenkteilen des Lastenträgers, und
- Figur 8: den Lastenträger gemäß der vorhergehenden Figuren mit teilweise in Gebrauchsstellung gesteckten Steckbauteilen.

Ein Ladegestell 12 eines Lastenträgers 10 für ein Kraftfahrzeug 11 ist an einer Tragstruktur 13 schwenbkar gelagert. Die Tragstruktur 13 umfasst Schiebeelemente, z.B. Schiebestangen 14, die verschieblich an einer Karosserie 15 des Kraftfahrzeugs 11 gelagert sind. Die Schiebestangen 14 sind an in der Zeichnung nicht dargestellten Führungen geführt, beispielsweise Gleitführungen, Rollenführungen oder dergleichen. Das Ladegestell 12 kann für einen Nichtgebrauch in einen Aufnahmeraum 16 einer Karosserie 15 des Kraftfahrzeugs 11 eingeschoben werden, so dass der Lastenträger 10 in Nichtgebrauchsstellung vor eine Außenkontur des Kraftfahrzeuges 11 nicht oder nur unwesentlich vorsteht. Zur platzsparenden Unterbringung des Lastenträgers 10 sind mehrere der nachfolgend in Einzelnen beschriebenen Maßnahmen vorgesehen.

Der Lastenträger 10 enthält eine Schwenkteilanordnung 17 mit Schwenkteilen 18a-18d, die zum Erweitern eines Ladebereichs 19 an dem Ladegestell 12 schwenkbar gelagert sind. Die Schwenkteile 18a-18d sind an einem Ladegestellrahmen 20 des Ladegestells 20 schwenkbar gelagert, so dass zwischen einer Nichtgebrauchsstellung N und einer Gebrauchsstellung G schwenkbar gelagert. In der Gebrauchsstellung G stehen die Schwenkteile 18a-18d seitlich vor das Ladegestell 12 vor und vergrößern so den Ladebereich 19. In der Nichtgebrauchsstellung N hingegen sind die Schwenkteile 18a-18d nach innen, in einen Innenbereich des Ladegestellrahmens 20 geschwenkt. Dort ist ein Aufbewahrungsraum 21 für die Schwenkteile 18a-18d vorgesehen. Wenn die Schwenkteile 18a-18d in den Aufbewahrungsraum 21 nach innen geschwenkt sind, stehen sie nicht vor den Ladegestellrahmen 20 vor, so dass das Ladegestell 12 in den Aufnahmeraum 16 des Kraftfahrzeugs 11 eingeschoben werden kann.

Auf ähnlich platzsparende Weise können Steckbauteile 22 einer Steckbauteilgruppe 23 in dem durch das Ladegestell 12 definierten Aufbewahrungsraum 21 bei Nichtgebrauch untergebracht werden. Somit sind die Schwenkteile 18a-18d und die Steckbauteile 22 jeweils platzsparend verstaubar, so dass das Ladegestell 12 in der Art einer Schublade in den Aufnahmeraum 16 des Kraftfahrzeugs 11 eingeschoben werden kann.

An den vorderen, im ausgezogenen Zustand des Lastenträgers 10 freien Enden 24 der Schiebestangen 14 ist das Ladegestell 12 mit Schwenkgelenken 25 schwenkbar gelagert. Schwenklagerteile 26 der Schwenkgelenke 25 umgreifen rohrschellenartig Tragrohre 27. Arme 28 der Schwenklagerteile 26 umgreifen gabelartig die Schiebestangen 14. Bolzen 29 sind durch die Arme 28 sowie die freien Enden 24 der Schiebestangen 14 hindurch gesteckt, so das insgesamt die Schwenkgelenke 25 gebildet sind.

Die Schiebestangen 14 sowie die Tragrohre 27 verlaufen in Fahrzeuglängsrichtung 62. An den vom Kraftfahrzeug 11 abgewandten Ende sind die Tragrohre 27 durch einen Querträger 30 miteinander verbunden, so dass ein U-förmiger Tragrohrrahmen 31 gebildet ist. Die Tragrohre 27 und der Querträger 30 sind beispielsweise Metallprofile. Während der Querträger 30 beispielsweise einen rechteckigen Querschnitt hat, sind die Außenkonturen 32 der Tragrohre 27 zumindest außenseitig kreisrund.

An den freien Enden der Tragrohre 27 sind Lagerstücke 33 vorgesehen, die in einer Fahrstellung F des Ladegestells 12 auf der Tragstruktur 13, insbesondere den Schiebestangen 14 aufliegen. In der Fahrstellung F ist das Ladegestell 12 an den Schwenkgelenken 25 und mit den auf den Schiebestangen 14 aufliegenden Lagerstücken 33 an der Tragstruktur 13 festgelegt. Vor die Lagerstücke 33 stehen Befestigungsabschnitte 34 vor, die Bohrungen 35 zum Durchstecken von Befestigungsmitteln, beispielsweise Befestigungsbolzen aufweisen. Mit diesen Befestigungsmitteln kann das Ladegestell 12 an der Tragstruktur 13 in der Fahrstellung F fixiert werden.

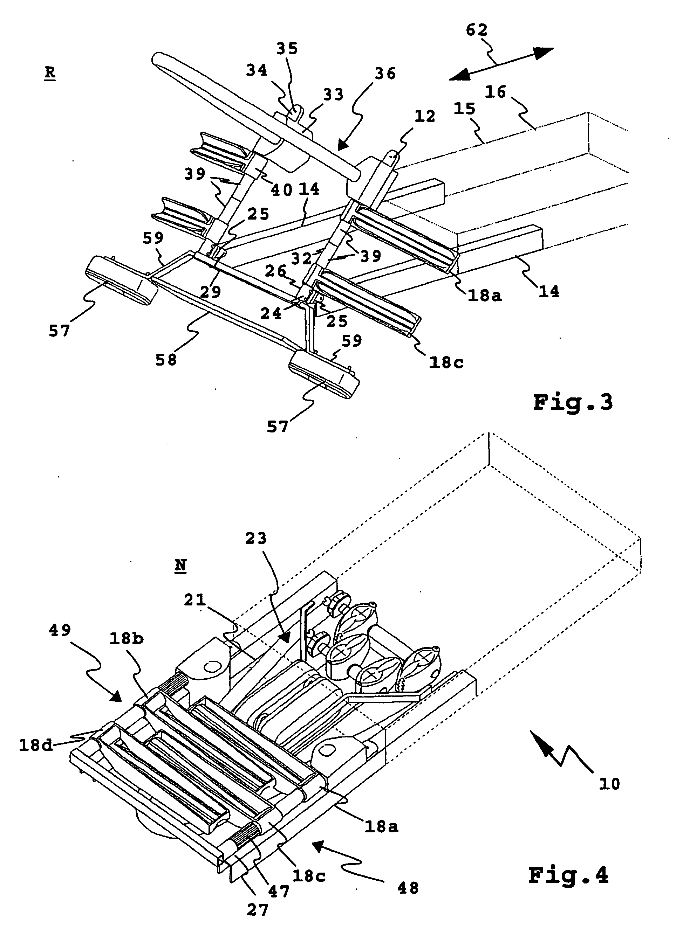

Wenn das Ladegestell 12 in eine Freigabestellung R geschwenkt ist (Figur 3), gibt es einen Schwenkbereich 36 beispielsweise für eine Heckklappe des Kraftfahrzeuges 11 frei. Die Lagerstücke 33 haben Ausnehmungen 37 mit einer Innenkontur, die einer Außenkontur der Schiebestangen 14 entspricht. Somit liegen die Lagerstücke 33 nicht nur auf der Oberseite der Schiebestangen 14 auf, sondern stützen sich auch innen (außenseitig wäre auch möglich) an den Schiebestangen 14 ab, so dass das Ladegestell 12 auch in horizontaler Richtung in der Fahrstellung F festgelegt ist. Die Lagerstücke 33 bestehen beispielsweise aus Kunststoff.

Die Montage des Lastenträgers 10 für einen Gebrauch stellt sich folgendermaßen dar:

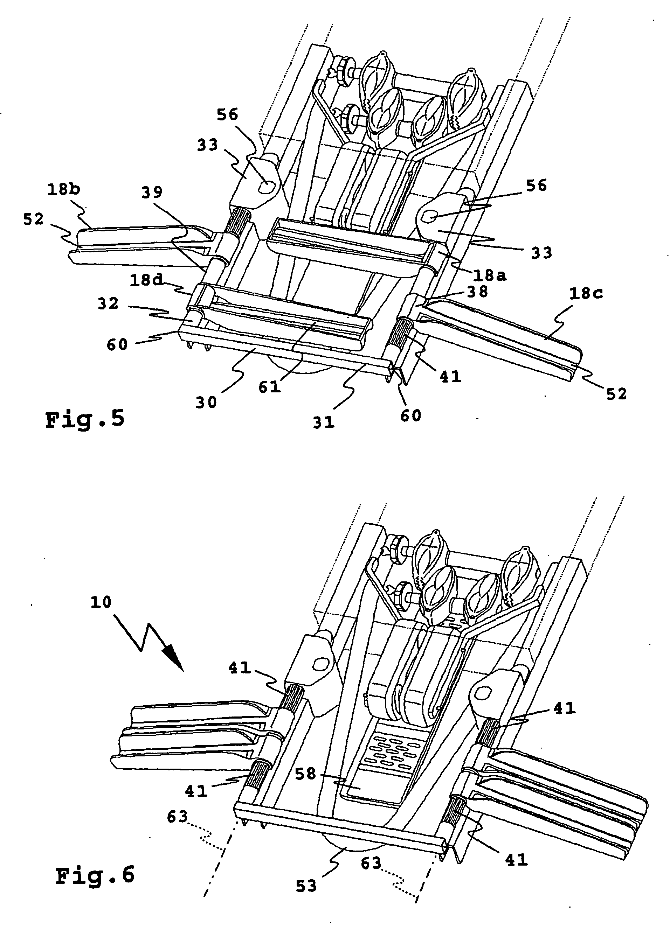

Das Ladegestell 12 wird an der Tragstruktur 13 aus dem Heckbereich des Kraftfahrzeugs 11, das heißt aus dem Aufnahmeraum 16 herausgezogen, bis es etwa die in Figur 4 dargestellte Position einnimmt. Dann sind sämtliche Schwenkteile 18a-18d noch in den Aufbewahrungsraum 21 eingeschwenkt. Sodann werden sequentiell die Schwenkteile 18a-18d nach außen geschwenkt. Dies ist ab Figur 5 dargestellt. Zunächst werden beispielsweise die beiden Schwenkteile 18b, 18c nach außen geschwenkt. Von der Nichtgebrauchsstellung ausgehend ist dies nämlich nur bei den beiden Schwenkteilen 18b, 18c möglich, weil nur deren Schwenkteil-Lagerbereiche 38 ausgehend von der in Figur 4 dargestellten Aufbewahrungslage im Bereich von Ladegestell-Lagerbereichen 39 des Ladegestells 12 sind. In den Ladegestell-Lagerbereichen 39 sind die Schwenkteile 18a-18d bezüglich des Ladegestells 12 um eine Schwenkachse 63 schwenkbeweglich. Die Schwenkteil-Lagerbereiche 38 der Schwenkteile 18a, 18a sind in der in Figur 5 dargestellten Axialposition an Ladegestell-Haltebereichen 41 angeordnet und daher nicht schwenkbar.

Die Lagerbereiche 39 des Ladegestells 12 werden durch die Tragrohre 27 gebildet. Die Tragrohre 27 bilden sozusagen Innenrohre, die Schwenkteilenden 40 der Schwenkteile 18a-18d durchdringen. Die Schwenkteilenden 40 sind hülsenartig.

Axial neben den Ladegestell-Lagerbereichen 39 sind die Ladegestell-Haltebereiche 41 einer Schwenkfixierungseinrichtung 42 zum schwenkfesten Festlegen der Schwenkteile 18a-18d bezüglich des Ladegestells 12 vorgesehen. Die Schwenkteile 18a-18d sind zwischen den Ladegestell-Lagerbereichen 39 und den Haltebereichen 41 axial verschieblich. Während die Schwenkteile 18a-18d in den Lagerbereichen 39 schwenkbar sind, sind sie in den Haltebereichen 41 schwenkfest festgelegt.

Durch eine einfache Schiebeoperation zwischen den Bereichen 39, 41 ist die Schwenkfixierung der Schwenkteile 18a-18d herstellbar oder wieder lösbar:

An der Innenseite der Schwenkteil-Lagerbereiche 38 ist jeweils eine Zahnstruktur 43 vorgesehen. Die Zahnstrukturen 43 sind jeweils am gesamten Innenumfang der Schwenkteil-Lagerbereiche 38 vorgesehen. Mit den Zahnstrukturen 43 korrespondierende Zahnstrukturen 44 sind an den Haltebereichen 41 vorhanden. Eine Zahnstruktur 44 umfasst jeweils einen gesamten Außenumfang eines Haltebereichs 41.

Ein Zahnabstand von Zähnen der Zahnstrukturen 43, 44, die Vorsprünge 45 bilden, korrespondiert mit einem Abstand von Nuten 46 zwischen den Vorsprüngen 45. Mithin sind die Vorsprünge 45 und die Nuten 46 äquidistant. Somit ist es möglich, die Schwenkteile 18a-18d in Schwenkstellungen bezüglich des Ladegestells 12 festzulegen, die mit einem Zahnabstand zwischen den Vorsprüngen 45 bzw. den Nuten 46 korrespondiert. Die Vorsprünge 45 haben einen engen Abstand, so dass eine Vielzahl von Schwenkstellungen ohne weiteres herstellbar ist. Ferner stützen sich eine Vielzahl von Vorsprünge 45 an einer Vielzahl von Nuten 46 bzw. Seitenwandungen von Nuten 46 ab, so dass eine gleichmäßige Krafteinleitung von den Schwenkteilen 18a-18d auf das Ladegestell 12 gewährleistet ist.

Beim Ausführungsbeispiel sind die Vorsprünge 45 und die Nuten 46 bei beiden Zahnstrukturen 43, 44 gleichartig, das heißt jeweils gleich breit und haben einen gleichen Schrägverlauf zum jeweils anderen Zahnstruktur-Bauteil hin. Es versteht sich, dass an Stelle der Zahnstrukturen 43, 44 auch Zahnstrukturen vorgesehen sein können, die unterschiedlich beschaffene Vorsprünge haben, z.B. unterschiedlich breite Vorsprünge wobei die Nuten dann korrespondierend beschaffen sein müssen.

Ein freier Innenumfang der Zahnstrukturen 43 an den Schwenkteil-Lagerbereichen 38 entspricht etwa dem Außenumfang der Ladegestell-Lagerbereiche 39, so dass eine Gleitlagerung gebildet ist.

Die Zahnstrukturen 44 der Haltebereiche 41 sind an Zahnbauteilen 47 vorgesehen, die beispielsweise auf die Tragrohre 27 aufgesteckt, aufgeschrumpft oder aufgeklebt sind. Die Zahnbauteile 47 sind beispielsweise Kunststoffbauteile.

Die Schwenkteile 18a-18d sind paarweise gruppiert, wobei die Schwenkteile 18a und 18c ein erstes Schwenkteil-Paar 48 bilden und die am gegenüberliegenden Tragrohr 27 axial verschieblich und schwenkbar gelagerten Schwenkteile 18b, 18d ein zweites Schwenkteil-Paar 49 bilden. Die Ladegestell-Lagerbereiche 39 für die beiden Paare 48 und 49 liegen jeweils unmittelbar nebeneinander, während die Haltebereiche 41 axial voneinander entfernt sind. Zwischen den Haltebereichen 41 sind die Lagerbereiche 39 eines jeweiligen Tragrohrs 27 angeordnet.

Nachdem die Schwenkteile 18b, 18c nach außen geschwenkt sind (Figur 5) können die Schwenkteile 18a und 18d zu den benachbarten Schwenkteilen 18b und 18c der Paare 48, 49 hin axial verschoben werden. Dann gelangen die Schwenkteile 18a und 18c in die zugeordneten Lagerbereiche 39, so dass sie, wie in Figur 6 dargestellt, nach außen geschwenkt werden können.

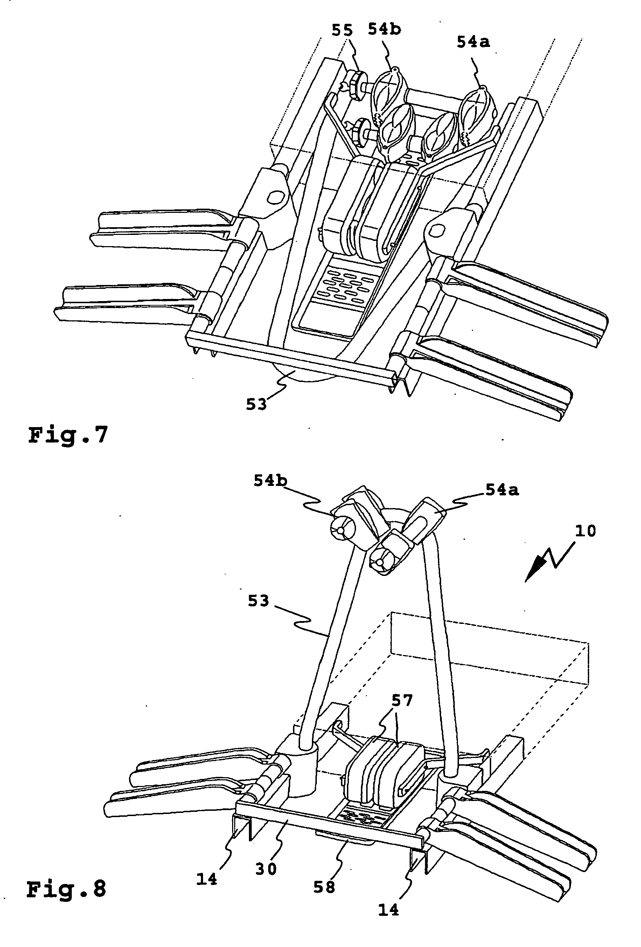

Sodann werden die Schwenkteile 18a und 18c sowie 18b und 18d voneinander weg in Richtung der jeweiligen Haltebereiche 41 axial verschoben, bis sie an Schiebeanschläge 50 anstoßen. Die Schiebeanschläge 50 sind durch geschlossene Enden 51 der Nuten 46 an den Zahnbauteilen 47 gebildet. Wenn die Schwenkteile 18a-18d wie in Figur 7 dargestellt voneinander weg in die zugeordneten Haltebereiche 41 eingeschoben sind, sind sie schwenkfest festgelegt.

Die Schwenkteile 18a-18d weisen jeweils eine Rinne 52 zur Aufnahme von Fahrrädern auf. Durch die Einstellung einer jeweiligen Schwenkposition der Schwenkteile 18a-18d ist ein einfache Anpassung an unterschiedlich große Fahrräder, das heißt Fahrräder mit unterschiedlichem Achsabstand möglich. In vertikaler Richtung können die Fahrräder dann durch Klemmen 54a, 54b an einem Haltebügel 53 gehalten werden. Die Klemmen 54a, 54b sind beispielsweise an einem oberen Endabschnitt des Haltebügels 53 lösbar befestigbar. Die Klemme 54a steht weiter von dem Haltebügel 53 ab und ist somit den Schwenkteilen 18c, 18d zugeordnet, während die Klemme 54b kürzer ist und den Schwenkteilen 18a, 18b zugeordnet ist. Zweckmäßigerweise sind die Klemmen 54a, 54b verschließbar, so dass eine Diebstahlsicherung für das am Lastenträger 10 befestigte Ladgut vorgesehen ist.

Ein vorderes, geschlossenes Ende des Haltebügels 53 untergreift in seiner Aufbewahrungsstellung (siehe z.B. Figur 7) den Querträger oder die Querstrebe 30. Zur Montage werden freien Enden 55 der Haltebügel 53 in Steckaufnahmen 56 eingesteckt. Die Steckaufnahmen 56 verlaufen vertikal und sind nach oben offen. Während ein oberer Abschnitt des Haltebügels 53 eine V-förmige Gestalt hat, verlaufen die beiden Endbereiche oder freien Enden 55 parallel zueinander.

Der Haltebügel 53 sowie Leuchten 57 und ein Kennzeichenträger 58 bilden die Steckbauteile 22.

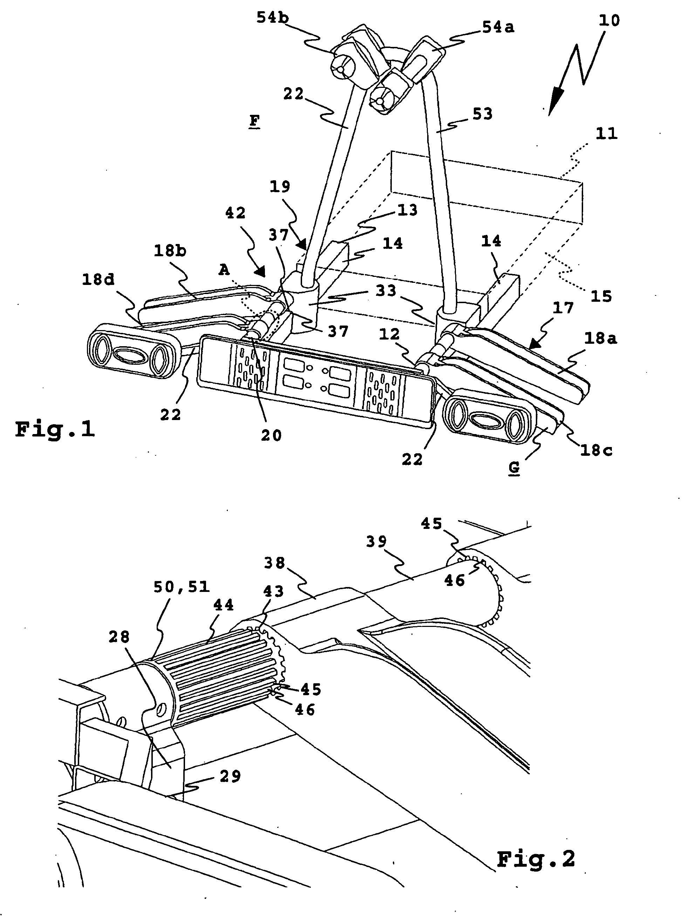

Die Leuchten 57 sind an Steckarmen 59 angeordnet, die in Steckaufnahmen 60 einsteckbar sind. Die Steckaufnahme 60 sind beispielsweise seitlich offene Enden des Querträgers 30. Zu den Leuchten 57 verlaufen in der Zeichnung nicht dargestellte Kabel, wobei die Kabel derart lang bemessen sind, dass die Leuchten 57 in die Gebrauchsstellung (Figur 1) steckbar sind und andererseits in der Nichtgebrauchsstellung in dem Aufbewahrungsraum 21 anordenbar sind. Die Steckarme 59 stehen nach hinten seitlich vor die Tragrohre 27 vor.

Der Kennzeichenträger 58 ist in der Nichtgebrauchsstellung unterhalb der Leuchten 57 positioniert und wird in der Gebrauchsstellung beispielsweise zwischen die Leuchten 57 geklemmt.

Die Schwenkteile 18a-18d haben neben der Rinne 52, die in der nach außen geschwenkten Gebrauchsstellung der Schwenkteile 18a-18d nach oben offen ist, an ihrer Unterseite eine weitere Rinne 61, die in der in den Aufbewahrungsraum 21 geschwenkten Stellung der Schwenkteile 18a-18d nach oben zeigt. Wenn z.B. das Schwenkteil 18a nach innen geschwenkt ist (Figur 5) und das Schwenkteil 18b nach außen vor das Ladegestell 12 vorsteht und die beiden Schwenkteile 18a, 18b in den jeweiligen Haltebereichen 41 schwenkfest festgelegt sind, ist beispielsweise ein Aufstellplatz für ein Fahrzeug mit kurzem Achsstand, z.B. ein Kinderfahrrad, gegeben.

## Patentansprüche

1. Lastenträger für ein Kraftfahrzeug (11), insbesondere einen Personenkraftwagen, mit einem zum Tragen einer Last vorgesehenen Ladegestell (12), das in einer Arbeitsstellung des Lastenträgers (10) nach hinten vor einen Heckbereich des Kraftfahrzeugs (11) vorsteht und einen Ladebereich (19) zum Aufladen einer Last bereitstellt, mit einer Schwenkteilanordnung (17) mit mindestens einem Schwenkteil (18a-18d) zum Erweitern des Ladebereichs (19), wobei das mindestens eine Schwenkteil (18a-18d) mit einem Schwenkteil-Lagerbereich (38) an einem Ladegestell-Lagerbereich (39) des Ladegestells (12) um eine Schwenkachse (63) zwischen einer Gebrauchsstellung (G) und einer Nichtgebrauchsstellung (N) schwenkbeweglich gelagert ist, wobei das mindestens eine Schwenkteil (18a-18d) entlang der Schwenkachse (63) axial zwischen dem Ladegestell-Lagerbereich (39) und einem Ladegestell-Haltebereich (41) des Ladegestells (12) verschieblich ist, wobei das mindestens eine Schwenkteil (18a-18d) in dem Ladegestell-Haltebereich (41) mit einer Schwenkfixierungseinrichtung (42) bezüglich des Ladegestells (12) schwenkfest festlegbar ist, und wobei die Schwenkfixierungseinrichtung (42) mindestens einen Vorsprung (45) umfasst, der zur Schwenkfestlegung des mindestens einen Schwenkteils (18a-18d) in eine entlang der Schwenkachse (63) verlaufende Nut (46) eingreift, die zum Einschieben des mindestens einen Vorsprungs (45) zum Ladegestell-Lagerbereich (39) hin seitlich offen ist, **dadurch gekennzeichnet, dass** die Nut (46) an einem von dem Ladegestell-Lagerbereich (39) entfernten Ende einen Schiebe-Anschlag (50) aufweist.

2. Lastenträger nach Anspruch 1, **dadurch gekennzeichnet, dass** die Schwenkfixierungseinrichtung (42) das mindestens eine Schwenkteil (18a-18d) bei einem Einschieben in den Ladegestell-Haltebereich (41) schwenkfest festlegt.

3. Lastenträger nach Anspruch 1 oder 2, **dadurch gekennzeichnet, dass** die Nut (46) ein geschlossenes Ende (51) der Nut (46) und/oder eine konische Verengung als Schiebe-Anschlag (50) aufweist.

4. Lastenträger nach einem der vorhergehenden Ansprüche, **dadurch gekennzeichnet, dass** der mindestens eine Vorsprung (45) nach radial außen vor den Ladegestell-Haltebereich (41) vorsteht und die Nut (46) zu einem Innenumfang des Schwenkteil-Lagerbereichs (38) offen ist und/oder dass die Nut (46) an dem Ladegestell-Haltebereich (41) vorgesehen ist und nach radial außen offen ist, und dass der mindestens eine Vorsprung (45) nach innen zu der Nut (46) vorsteht.

5. Lastenträger nach einem der vorhergehenden Ansprüche, **dadurch gekennzeichnet, dass** der mindestens eine Vorsprung (45) und/oder die Nut (46) einen Bestandteil einer Zahnstruktur (43, 44) mit mehreren Vorsprüngen (45) oder mehreren Nuten (46) bilden, so dass das mindestens eine Schwenkteil (18a-18d) in mindestens zwei Schwenkpositionen bezüglich des Ladegestell-Lagerbereichs (39) schwenkfest festlegbar ist, wobei die jeweilige Zahnstruktur (43, 44) insbesondere an einem gesamten Außenumfang des Ladegestell-Lagerbereichs (39) oder einem gesamten Innenumfang des Schwenkteil-Lagerbereichs (38) vorgesehen ist.

6. Lastenträger nach Anspruch 4 oder 5, **dadurch gekennzeichnet, dass** zumindest eine Zahnstruktur (43) an dem Schwenkteil-Lagerbereich (38) vorgesehen ist, und dass zur Bildung einer Gleitlagerung ein freier Innenumfang der Zahnstruktur (43) etwa einem Außenumfang (32) des Ladegestell-Lagerbereichs (39) entspricht.

7. Lastenträger nach einem der Ansprüche 4 bis 6, **dadurch gekennzeichnet, dass** an dem Schwenkteil-Lagerbereich (38) und an dem Ladegestell-Lagerbereich (39) Zahnstrukturen (43, 44) vorgesehen sind, die in der Gebrauchsstellung (G) ineinander eingreifen.

8. Lastenträger nach einem der vorhergehenden Ansprüche, **dadurch gekennzeichnet, dass** die Schwenkteilanordnung (17) mindestens zwei Schwenkteile (18a-18d) aufweist, die an zwei einander gegenüberliegenden Ladegestell-Lagerbereichen (39) jeweils um eine Schwenkachse (63) schwenkbar und entlang der Schwenkachse (63) axial verschieblich sind, und dass die mindestens zwei Schwenkteile (18a-18d) in der Nichtgebrauchsstellung (N) nebeneinander, insbesondere aneinander anliegend, in einem Aufbewahrungsraum (21) angeordnet sind und in der Gebrauchsstellung (G) vor das Ladegestell (12) vorstehen.

9. Lastenträger nach Anspruch 8, **dadurch gekennzeichnet, dass** die Haltebereiche der beiden Ladegestell-Lagerbereiche (39) einander gegenüberliegend verlaufen derart, dass zum Verschieben eines der in Nichtgebrauchsstellung (N) befindlichen Schwenkteile (18a-18d) aus dem Ladegestell-Haltebereich (41) in den daneben angeordneten Ladegestell-Lagerbereich (39) das gegenüberliegende andere Schwenkteil (18a-18d) zumindest teilweise aus dem Aufbewahrungsraum (21) ausgeschwenkt werden muss.

10. Lastenträger nach einem der vorhergehenden Ansprüche, **dadurch gekennzeichnet, dass** die Schwenkteilanordnung (17) ein erstes und ein zweites Paar (48, 49) einander gegenüberliegend an dem Ladegestell (12) gelagerter Schwenkteile (18a-18d) aufweist, wobei die Schwenkteile (18a-18d) des ersten und des zweiten Schwenkteil-Paars (48, 49) in der Nichtgebrauchsstellung (N) in dem Aufbewahrungsraum (21) abwechselnd vorzugsweise nebeneinander angeordnet sind.

11. Lastenträger nach Anspruch 10, **dadurch gekennzeichnet, dass** die Ladegestell-Lagerbereiche (39) für ein jeweiliges Schwenkteil-Paar (48, 49) nebeneinander und die Haltebereiche voneinander entfernt angeordnet sind.

12. Lastenträger nach einem der vorhergehenden Ansprüche, **dadurch gekennzeichnet, dass** das mindestens eine Schwenkteil (18a-18d) mindestens eine Rinne (52, 61), insbesondere zur Aufnahme eines Fahrrads, aufweist.

13. Lastenträger nach einem der vorhergehenden Ansprüche, **dadurch gekennzeichnet, dass** er mindestens eine Steckaufnahme (56, 60) für mindestens ein Steckbauteil (22) aufweist, das für eine Gebrauchsstellung (G) in die mindestens eine Steckaufnahme (56, 60) eingesteckt ist, wobei das mindestens eine Steckbauteil (22) vorteilhaft eine Stütze umfasst, die in der Gebrauchsstellung (G) nach oben vor das Ladegestell (12) vorsteht, und/oder vorteilhaft eine Leuchte umfasst, die in der Gebrauchsstellung (G) an dem Ladegestell (12) oder einem Schwenkteil (18a-18d) angeordnet ist.

14. Lastenträger nach Anspruch 13, **dadurch gekennzeichnet, dass** das mindestens eine Steckbauteil (22) einen Bestandteil einer Steckbauteilgruppe (23) bildet, die in der Nichtgebrauchsstellung (N) einem Aufbewahrungsraum (21) des Ladegestells (12) anordenbar ist und/oder dass das mindestens eine Steckbauteil (22) in der Nichtgebrauchsstellung (N) unterhalb des mindestens einen Schwenkteils (18a-18d) angeordnet ist.

15. Lastenträger nach einem der vorhergehenden Ansprüche, **dadurch gekennzeichnet, dass** der Ladegestell-Lagerbereich (39) an einer Tragstange (27) vorgesehen ist.

16. Lastenträger nach einem der vorhergehenden Ansprüche, **dadurch gekennzeichnet, dass** das Ladegestell (12) an dem Kraftfahrzeug (11) verschieblich gelagert ist und/oder dass er eine Halterung zum lösbaren Anordnen an einer Anhängekupplung des Kraftfahrzeugs (11) aufweist.

17. Lastenträger nach einem der vorhergehenden Ansprüche, **dadurch gekennzeichnet, dass** das Ladegestell (12) an einer Tragstruktur (13) zwischen einer Fahrstellung und einer Freigabestellung schwenkbar gelagert ist, und dass das Ladegestell (12) in der Freigabestellung einen Schwenkbereich (36) einer Heckklappe des Kraftfahrzeugs (11) freigibt.

## Claims

1. Load carrier for a motor vehicle (11), in particular for a car, comprising a loading frame (12) which, in a working position of the load carrier, (10) projects rearwards in front of a rear region of the motor vehicle (11) and makes available a loading area (19) for placing a load, further comprising a swivel part arrangement (17) with at least one swivel part (18a-18d) for extending the loading area (19), wherein the at least one swivel part (18a-18d) is mounted with a swivel part bearing region (38) on a loading frame bearing region (39) of the loading frame (12) for pivoting about a pivot axis (63) between an operative position (G) and an inoperative position (N), wherein the at least one swivel part (18a-18d) is axially movable along the pivot axis (63) between the loading frame bearing region (39) and a loading frame holding region (41) of the loading frame (12), wherein the at least one swivel part (18a-18d) can be secured against swivelling relative to the loading frame (12) by a swivel prevention device (42) in the loading frame holding region (41), and wherein the swivel prevention device (42) comprises at least one projection (45) which, for preventing the swivelling of the at least one swivel part (18a-18d), engages a groove (46) which runs along the pivot axis (63) and is laterally open towards the loading frame bearing region (39) for inserting the at least one projection (45), **characterised in that** the groove (46) has a sliding stop (50) at an end which is remote from the loading frame bearing region (39).

2. Load carrier according to claim 1, **characterised in that** the swivel prevention device (42) secures the at least one swivel part (18a-18d) against swivelling during an insertion into the loading frame holding region (41).

3. Load carrier according to claim 1 or 2, **characterised in that** the groove (46) has a closed end (51) of the groove (46) and/or a conical narrowing to act as sliding stop (50).

4. Load carrier according to any of the preceding claims, **characterised in that** the at least one projection (45) projects radially outwards in front of the loading frame holding region (41), and **in that** the groove (46) is open towards an inner circumference of the swivel part bearing region (38), and/or **in that** the groove (46) is provided on the loading frame holding region (41) and is open radially outwards, and **in that** the at least one projection (45) projects inwards towards the groove (46).

5. Load carrier according to any of the preceding claims, **characterised in that** the at least one projection (45) and/or the groove (46) form(s) a part of a tooth structure (43, 44) with a plurality of projections (45) or a plurality of grooves (46), so that the at least one swivel part (18a-18d) can be secured against swivelling with respect to the loading frame bearing region (39) in at least two swivelling positions, the respective tooth structure (43, 44) being in particular provided on an entire outer circumference of the loading frame bearing region (39) or an entire inner circumference of the swivel part bearing region (38).

6. Load carrier according to claim 4 or 5, **characterised in that** at least one tooth structure (43) is provided on the swivel part bearing region (38), and **in that** a free inner circumference of the tooth structure (43) approximately corresponds to an outer circumference of the loading frame bearing region (39) to form a plain bearing arrangement.

7. Load carrier according to any of claims 4 to 6, **characterised in that** tooth structures (43, 44) are provided in the swivel part bearing region (38) and in the loading frame bearing region (39), which tooth structures (43, 44) engage each other in the operative position (G).

8. Load carrier according to any of the preceding claims, **characterised in that** the swivel part arrangement (17) comprises at least two swivel parts (18a-18d), each of which is pivotable about a pivot axis (63) and axially movable along the pivot axis (63) in opposite loading frame bearing regions (39), and **in that** the at least two swivel parts (18a-18d) are, in the inoperative position (N), placed next to each other, in particular adjoining each other, in a storage space (21) and, in the operative position (G), project in front of the loading frame (12).

9. Load carrier according to claim 8, **characterised in that** the holding regions of the two loading frame bearing regions (39) extend opposite each other in such a way that, for pivoting one of the swivel parts (18a-18d) placed in the inoperative position (N) from the loading frame holding region (41) into the adjacent loading frame bearing region (39), the other, opposite, swivel part (18a-18d) has to be at least partially pivoted out of the storage space (21).

10. Load carrier according to any of the preceding claims, **characterised in that** the swivel part arrangement (17) comprises a first and a second pair (48, 49) of swivel parts (18a-18d) mounted opposite each other on the loading frame (12), wherein the swivel parts (18a-18d) of the first and a second swivel part pair (48, 49) are, in the inoperative position (N), alternately, preferably next to each other, placed in the storage space (21).

11. Load carrier according to claim 10, **characterised in that** the loading frame bearing regions (39) for each swivel part pair (48, 49) are arranged adjacent to each other and the holding regions are arranged remote from each other.

12. Load carrier according to any of the preceding claims, **characterised in that** the at least one swivel part (18a-18d) has a groove (52, 61), in particular for the accommodation of a bicycle.

13. Load carrier according to any of the preceding claims, **characterised in that** it comprises at least one plug-in receptacle (56, 60) for at least one plug-in component (22) which is inserted into the at least one plug-in receptacle (56, 60) for an operative position (G), the at least one plug-in component (22) advantageously comprising a support which, in the operative position (G), projects upwards in front of the loading frame (12), and/or advantageously comprises a lamp which, in the operative position (G), is mounted on the loading frame (12) or on a swivel part (18a-18d).

14. Load carrier according to claim 13, **characterised in that** the at least one plug-in component (22) forms a part of a plug-in assembly (23) which, in the inoperative position (N), is placed in a storage space (21) of the loading frame (12), and/or **in that** the at least one plug-in component (22) is placed below the at least one swivel part (18a-18d) in the inoperative position (N).

15. Load carrier according to any of the preceding claims, **characterised in that** the load frame bearing region (39) is provided on a support rod (27).

16. Load carrier according to any of the preceding claims, **characterised in that** the loading frame (12) is displaceably mounted on the motor vehicle (11), and/or **in that** it comprises a holder for releasable placement on a trailer coupling of the motor vehicle (11).

17. Load carrier according to any of the preceding claims, **characterised in that** the loading frame (12) is mounted on a support structure (13) for pivoting between a driving position and a release position, and **in that** the loading frame (12) clears a swivelling region (36) of a tailgate of the motor vehicle (11) in the release position.

## Revendications

1. Support de charge pour un véhicule automobile (11), en particulier une voiture particulière, avec un châssis de chargement (12) prévu pour porter une charge, qui dépasse vers l'arrière d'une zone arrière du véhicule automobile (11) dans une position de travail du support de charge (10) et met à disposition une zone de chargement (19) pour le chargement d'une charge, avec un ensemble de parties de pivotement (17) doté d'au moins une partie de pivotement (18a-18d) pour l'élargissement de la zone de chargement (19), sachant qu'au moins une partie de pivotement (18a-18d) est logée de manière mobile en pivotement avec une zone de palier de partie de pivotement (38) sur une zone de palier (39) du châssis de chargement (12) autour d'un axe de pivotement (63) entre une position d'utilisation (G) et une position de non utilisation (N), sachant qu'au moins une partie de pivotement (18a-18d) est mobile le long de l'axe de pivotement (63) dans le sens axial entre la zone de palier de châssis de chargement (39) et une zone de retenue (41) du châssis de chargement (12), sachant qu'au moins une partie de pivotement (18a-18d) peut être fixée de manière solidaire en pivotement par rapport au châssis de chargement (12) dans la zone de retenue de châssis de chargement (41) avec un dispositif de fixation de pivotement (42), et sachant que le dispositif de fixation de pivotement (42) comporte au moins une saillie (45) qui s'engage pour la fixation du pivotement d'au moins une partie de pivotement (18a-18d) dans une rainure (46) s'étendant le long de l'axe de pivotement (63), qui est ouverte latéralement vers la zone de palier du châssis de chargement (39) pour l'insertion d'au moins une saillie (45), **caractérisé en ce que** la rainure (46) présente une butée coulissante (50) sur une extrémité éloignée de la zone de palier de châssis de chargement (39).

2. Support de charge selon la revendication 1, **caractérisé en ce que** le dispositif de fixation de pivotement (42) fixe de manière solidaire en pivotement au moins une partie de pivotement (18a-18d) lors d'une insertion dans la zone de retenue de châssis de chargement (41).

3. Support de charge selon la revendication 1 ou 2, **caractérisé en ce que** la rainure (46) présente une extrémité fermée (51) de la rainure (46) et/ou un rétrécissement conique comme butée coulissante (50).

4. Support de charge selon l'une quelconque des revendications précédentes, **caractérisé en ce qu'**au moins une saillie (45) dépasse radialement vers l'extérieur de la zone de retenue de châssis de chargement (41) et la rainure (46) est ouverte vers une périphérie intérieure de la zone de palier de partie de pivotement (38) et/ou **en ce que** la rainure (46) est prévue sur la zone de retenue de châssis de chargement (41) et est ouverte radialement vers l'extérieur, et **en ce qu'**au moins une saillie (45) dépasse vers l'intérieur vers la rainure (46).

5. Support de charge selon l'une quelconque des revendications précédentes, **caractérisé en ce qu'**au moins une saillie (45) et/ou la rainure (46) forme un élément d'une structure dentée (43, 44) avec plusieurs saillies (45) ou plusieurs rainures (46) de sorte qu'au moins une partie de pivotement (18a-18d) puisse être fixée de manière solidaire en pivotement dans au moins deux positions de pivotement par rapport à la zone de palier de châssis de chargement (39), sachant que la structure dentée respective (43, 44) est prévue en particulier sur une périphérie extérieure entière de la zone de palier de châssis de chargement (39) ou une périphérie intérieure entière de la zone de palier de partie de pivotement (38).

6. Support de charge selon la revendication 4 ou 5, **caractérisé en ce qu'**au moins une structure dentée (43) est prévue sur la zone de palier de partie de pivotement (38), et **en ce que** pour la formation d'un logement glissant, une périphérie intérieure libre de la structure dentée (43) correspond à peu près à une périphérie extérieure (32) de la zone de palier de châssis de chargement (39).

7. Support de charge selon l'une quelconque des revendications 4 à 6, **caractérisé en ce que** des structures dentées (43, 44) qui s'engagent dans la position d'utilisation (G) l'une dans l'autre, sont prévues sur la zone de palier de partie de pivotement (38) et sur la zone de palier de châssis de chargement (39).

8. Support de charge selon l'une quelconque des revendications précédentes, **caractérisé en ce que** l'ensemble de parties de pivotement (17) présente au moins deux parties de pivotement (18a-18d) pouvant pivoter sur deux zones de palier de châssis de chargement (39) opposées respectivement autour d'un axe de pivotement (63) et mobiles axialement le long de l'axe de pivotement (63), et **en ce qu'**au moins deux parties de pivotement (18a-18d) sont disposées dans la position de non utilisation (N) l'une à côté de l'autre en particulier de manière à reposer l'une contre l'autre dans un espace de stockage (21) et dépassent du châssis de chargement (12) dans la position d'utilisation (G).

9. Support de charge selon la revendication 8, **caractérisé en ce que** les zones de retenue des deux zones de palier de châssis de chargement (39) s'étendent à l'opposé de telle manière que pour le déplacement de l'une des parties de pivotement (18a-18d) se trouvant en position de non utilisation (N) hors de la zone de retenue de châssis de chargement (41) dans la zone de palier de châssis de chargement (39) disposée à côté, l'autre partie de pivotement (18a-18d) opposée doit être pivotée au moins partiellement hors de l'espace de stockage (21).

10. Support de charge selon l'une quelconque des revendications précédentes, **caractérisé en ce que** l'ensemble de parties de pivotement (17) présente une première et une seconde paires (48, 49) de parties de pivotement (18a-18d) logées à l'opposé sur le châssis de chargement (12), sachant que les parties de pivotement (18a-18d) de la première et de la seconde paires de parties de pivotement (48, 49) sont disposées alternativement dans la position de non utilisation (N) dans l'espace de stockage (21) de préférence les unes à côté des autres.

11. Support de charge selon la revendication 10, **caractérisé en ce que** les zones de palier de châssis de chargement (39) pour une paire de parties de pivotement (48, 49) respective sont disposées l'une à côté de l'autre et les zones de retenue sont disposées à distance l'une de l'autre.

12. Support de charge selon l'une quelconque des revendications précédentes, **caractérisé en ce qu'**au moins une partie de pivotement (18a-18d) présente au moins une rigole (52, 61) en particulier pour le logement d'un vélo.

13. Support de charge selon l'une quelconque des revendications précédentes, **caractérisé en ce qu'**il présente au moins un logement à emboîtement (56, 60) pour au moins un composant d'emboîtement (22) qui est emboîté pour une position d'utilisation (G) dans au moins un logement à emboîtement (56, 60), sachant qu'au moins un composant d'emboîtement (22) comporte avantageusement un appui qui dépasse dans la position d'utilisation (G) vers le haut du châssis de chargement (12), et/ou comporte avantageusement une lampe disposée dans la position d'utilisation (G) sur le châssis de chargement (12) ou une partie de pivotement (18a-18d).

14. Support de charge selon la revendication 13, **caractérisé en ce qu'**au moins un composant d'emboîtement (22) forme un élément d'un groupe de composants d'emboîtement (23) qui peut être disposé dans la position de non utilisation (N) dans un espace de stockage (21) du châssis de chargement (12) et/ou **en ce qu'**au moins un composant d'emboîtement (22) est disposé dans la position de non utilisation (N) sous au moins une partie de pivotement (18a-18d).

15. Support de charge selon l'une quelconque des revendications précédentes, **caractérisé en ce que** la zone de palier de châssis de chargement (39) est prévue sur une tige porteuse (27).

16. Support de charge selon l'une quelconque des revendications précédentes, **caractérisé en ce que** le châssis de chargement (12) est logé de manière mobile sur le véhicule automobile (11) et/ou **en ce qu'**il présente une fixation pour l'agencement amovible sur un attelage du véhicule automobile (11).

17. Support de charge selon l'une quelconque des revendications précédentes, **caractérisé en ce que** le châssis de chargement (12) est logé de manière pivotante sur une structure porteuse (13) entre une position de roulement et une position de libération, et **en ce que** le châssis de chargement (12) dans la position de libération libère une zone de pivotement (36) d'un hayon de véhicule automobile (11).
